# EUROPEAN PATENT APPLICATION

(11) **EP 4 468 222 A1**
(43) Date of publication of application: **27.11.2024**
(21) Application number: 23175835.0
(22) Date of filing: 26.05.2023
(51) Int. Cl.: G06Q 10/1053, G06F 21/62

(54) **WEB-BASED INTERFACE FOR COLLECTING PERSONAL DATA**

(71) Applicant: Next u Holding AB, 113 25 Stockholm (SE)
(72) Inventor: LO FORTE, Josefine, 181 36 Lidingö (SE); LIDÉN, Stefan, 113 44 Stockholm (SE)
(74) Representative: Kransell & Wennborg KB

(57) **Abstract**

The present disclosure relates in an aspect to a method in an arrangement (100) comprising a basic system (101) executing on a first processing resource (200) and a data collection tool (102) executing on a separate second processing resource (300). The method comprises receiving (S101), by the basic system (101), a job application request of a candidate (103) for an advertised job via an interface (104) associated with the arrangement (100), wherein the request includes personal data of the candidate (103), associating (S102), by the basic system (101), the personal data of the candidate (103) with an anonymized identifier, and initiating (S103), by the basic system (101), a session with the data collection tool (102) and providing the data collection tool (102) with the anonymized identifier. The method further comprises acquiring (S104), by the data collection tool (102) via the interface (104), information from the candidate (103) required to complete the job application, creating (S105), by the data collection tool (102), job application assessment data by processing the acquired candidate information, and supplying (S106), by the data collection tool (102), the created job application assessment data to the basic system (101) along with the anonymized identifier, wherein the basic system (101) is enabled to associate the job application assessment data created by the data collection tool (102) with the personal data of the candidate (103).

## Description

### TECHNICAL FIELD

The present disclosure relates to a method in an arrangement comprising a basic system executing on a first processing resource and a data collection tool executing on a separate second processing resource, and further relates to an arrangement performing the method.

Further, computer programs comprising computer-executable instructions for causing the arrangement to perform the steps of the method when the computer-executable instructions are executed on first and second processing resources included in the arrangement.

Moreover, a computer program product is provided comprising computer readable mediums, the computer readable mediums having the computer programs embodied thereon.

### BACKGROUND

When an employer performs recruitment of personnel to an advertised job using a digital, web-based recruitment or screening tool, a candidate to the job is required to input information, typically based on a preconfigured questionnaire, in order for the recruitment tool to acquire enough information. The information is then supplied to the employer for subsequently being able to make an assessment as to whether or not the candidate is a good fit for the announced job.

However, such recruitment tools tend to be processing-heavy as great amounts of data must be entered into, and processed by, the tool before an assessment can be made by the employer.

The recruitment tool is typically integrated with a digital human resources (HR) system of the employer advertising the job. A basic set of functionalities in a digital HR system may be payroll, employee record management, time and attendance reporting, benefits administration, compensation, compliance reporting, talent management and applicant tracking system (ATS). An ATS supports HR specialists in carrying out recruitment processes, whereas the recruitment tool is designed primarily as an interface towards the job candidates.

Integration of the recruitment tool with the HR system may have as a consequence that the digital HR system itself at times is burdened by the data acquisition and processing undertaken by the recruitment tool, and the resulting deterioration in performance may be experienced by a wide range of employees in their daily interactions with the HR system.

It would seem attractive from a load-balancing point of view to execute the recruitment tool on processing resources separate from those of the digital HR system. However, the candidates may for integrity reasons be hesitant to provide contact information and/or perform a recruitment test with the tool, which could ultimately lead to a higher candidate dropout rate.

Further, prior art recruitment tools have a tendency of not collecting strong enough data for a fair evaluation of the candidate to be undertaken, as well as taking a biased approach towards the candidate in terms of questions that the candidate is being subjected to and the subsequent evaluation.

### SUMMARY

One objective is to solve, or at least mitigate, this problem in the state of the art and thus to provide a data collection tool where the candidate is not at risk of having her personal data associated with questionnaire-related information given during a job application process. Other objectives are to reduce any undesired bias in the recruitment process as well as collecting strong job assessment data of the candidates by subjecting the candidates to a more structured assessment process. The term "personal data" is used herein in a manner consistent with its meaning in Regulation (EU) 2016/679 (General Data Protection Regulation, "GDPR").

One or more of these objectives are attained in a first aspect by a method in an arrangement comprising a basic system executing on a first processing resource and a data collection tool executing on a separate second processing resource. The method comprises receiving, by the basic system, a job application request of a candidate for an advertised job via an interface associated with the arrangement, wherein the request includes personal data of the candidate, associating, by the basic system, the personal data of the candidate with an anonymized identifier, and initiating, by the basic system, a session with the data collection tool and providing the data collection tool with the anonymized identifier. The method further comprises acquiring, by the data collection tool via the interface, information from the candidate required to complete the job application, creating, by the data collection tool, job application assessment data by processing the acquired candidate information, and supplying, by the data collection tool, the created job application assessment data to the basic system along with the anonymized identifier, wherein the basic system is enabled to associate the job application assessment data created by the data collection tool with the personal data of the candidate.

One or more of these objectives are further attained in a second aspect by an arrangement comprising a basic system executing on a first processing resource and a data collection tool executing on a separate second processing resource. The arrangement is operative to receiving, by the basic system, a job application request of a candidate for an advertised job via an interface associated with the arrangement, wherein the request includes personal data of the candidate, associating, by the basic system, the personal data of the candidate with an anonymized identifier, and initiating, by the basic system, a session with the data collection tool and providing the data collection tool with the anonymized identifier. The arrangement is further operative to acquiring, by the data collection tool via the interface, information from the candidate required to complete the job application, creating, by the data collection, job application assessment data by processing the acquired candidate information, and supplying, by the data collection tool, the created job application assessment data to the basic system along with the anonymized identifier, wherein the basic system is enabled to associate the job application assessment data created by the data collection tool with the personal data of the candidate.

Advantageously, with the data collection tool executing separately from the basic system, the personal data of the candidate will not be entered into the data collection tool, but is maintained in the basic system separately from the information to be entered into the data collection tool.

Hence, the second processing resource executing appropriate software for embodying the data collection tool cannot associate information entered by the candidate into the data collection tool with the candidate's personal data.

In other words, any information entered by the candidate via the interface into the data collection tool is associated with the anonymized identifier utilized for allowing the basic system to subsequently associate any resulting assessment data being output from the data collection tool and input into the basic system with the correct candidate, but is separated from the personal data in the form of e.g. the candidate's e-mail address, home address or phone number entered by the candidate into of the basic system operating independently from the data collection tool.

Thus, the candidate is not at risk of having her personal data associated with questionnaire-related information given during the job application process.

Further, the risk of subjecting the candidate to any bias is advantageously decreased as the data collection tool cannot associate collected candidate data with the candidate's personal data.

Further advantageous is that, by separating the data collection tool from the basic system, any modification at the data collection tool, such as modification of a questionnaire presented to the candidate, is far more straightforward as compared to a scenario where the data collection tool is integrated with the basic system. Advantageously, this typically provides for a stronger set of candidate data being collected for subsequent assessment.

In an embodiment, the data collection tool is configured to encrypt at least a subset of the created job application assessment data and supplying the encrypted subset of the job application assessment data to the basic system. Advantageously, this raises the level of protection for the created job application assessment data.

In an embodiment, the encrypting of the created job application assessment data is performed utilizing a public key supplied by the basic system to the data collection tool.

In an embodiment, the encrypting of the created job application assessment data is performed utilizing a symmetric key shared between the basic system and the data collection tool.

In an embodiment, the basic system receives, via the interface, a request from the candidate that the acquired candidate information and the created job application assessment data should be deleted and sends to the data collection tool an instruction to delete said acquired candidate information and the created job application assessment data at the data collection tool. Advantageously, the candidate can thus rest assured that no job application assessment data thereafter is stored.

In an embodiment, the basic system provides, via the interface, a confirmation to the candidate that the acquired candidate information and the created job application assessment data has been deleted at the data collection tool.

In an embodiment, the basic system registers a time of receiving the request for deletion of the acquired candidate information and the created job application assessment data from the candidate and a time of performing the deletion of the acquired candidate information and the created job application assessment at the data collection tool.

In an embodiment, the acquired information from the candidate required to complete the job application comprises one or more of candidate video data recorded by a camera of the interface and candidate response data to a questionnaire presented to the candidate by the data collection tool via the interface. The response data, which is guided by the questions contained the questionnaire, may be said to constitute structured information - unlike for example a resumé created by the candidate in an arbitrary document format. The use of structured information about the candidates strengthens objectivity and decreases the risk of undesired bias on the part of the recruiter. The use of structured information could also improve the recall of the recruitment: it helps identify such candidates who possess the qualifications for a certain advertised job but accidentally omit this information from their resumés.

In an embodiment, the data collection tool creates job application assessment data performing one or more of formatting, cropping and compressing the acquired candidate video data.

In an embodiment, the data collection tool is configured with a template of the questionnaire and the initiating by the basic system of a session with the data collection tool further comprises providing the data collection tool with at least one identifier of the employer hosting the basic system. The acquiring by the data collection tool of information from the candidate required to complete the job application comprises presenting, by the data collection tool via the interface, a modified version of the template of the questionnaire being associated with the at least one identifier of the employer. The method further comprises receiving, by the data collection tool via the interface, response data of the candidate o said presented modified version of the template of the questionnaire. Advantageously, this provides for customizing questionnaires based on needs of specific employers, which in its turn will result in higher quality in the assessment.

In an embodiment, the modification of the template of the questionnaire comprises one or more of: translating a language of the template to a different language, adding questions to the template, deleting questions from the template and modifying questions of the template to create the modified version of the template.

In an embodiment, the initiating by the basic system of a session with the data collection tool further comprises instructing the data collection tool to further modify the modified version of the template of the questionnaire associated with the at least one identifier of the employer for presentation to the candidate.

In an embodiment, the receiving by the data collection tool of response data of the candidate to said presented modified version of the template of the questionnaire further comprises receiving a modification proposal of the candidate to further modify the presented version of the template of the questionnaire and confirming, by the data collection tool with the basic system, that the modification proposal of the candidate is to be implemented in the presented version of the template of the questionnaire. Advantageously, an employer hosting the basic system may thus take into account candidate modification proposals to the questionnaires.

In a third aspect, computer programs comprising computer-executable instructions are provided for causing the arrangement to perform steps of the method of the first aspect when the computer-executable instructions are executed on first and second processing units included in the arrangement.

In a fourth aspect, a computer program product comprising computer readable mediums is provided, the computer readable mediums having the computer programs according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 shows a functional view of an arrangement according to an embodiment;
Figure 2 shows a structural view of the arrangement of Figure 1;
Figure 3 shows a signalling diagram illustrating a method according to an embodiment;
Figure 4 shows a signalling diagram illustrating a method according to a further embodiment;
Figure 5 shows a signalling diagram illustrating a method according to yet a further embodiment;
Figure 6 shows a questionnaire according to an embodiment;
Figure 7 shows a signalling diagram illustrating a method according to an embodiment; and
Figure 8 shows a signalling diagram illustrating a method according to another embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

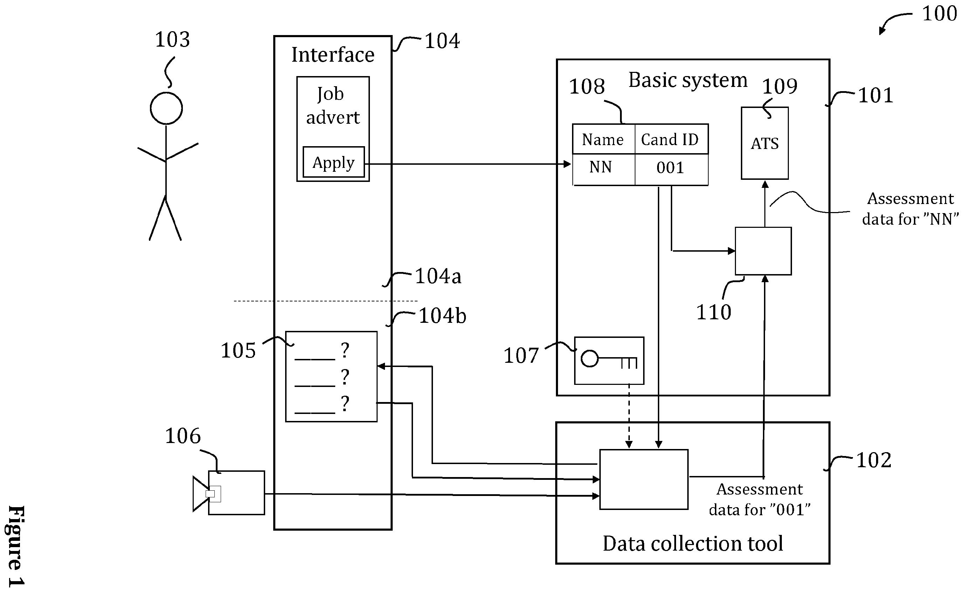

Figure 1 illustrates an arrangement 100 according to an embodiment.

As illustrated in Figure 1, an employer wishing to find candidates to an advertised job hosts a basic system 101, such as a project system, a job application system, a general-purpose digital HR system 101, etc., for managing various types of information associated with employed personnel, such as payroll, employee record management, time and attendance reporting, benefits administration, compensation, compliance reporting, talent management, ATS, etc.

As previously mentioned, such basic systems commonly also comprise recruitment or screening tools via which candidates to an advertised job may enter information based on questionnaires, which information subsequently is evaluated by the employer for assessing whether the candidates fit the job, i.e. to find high-quality candidates.

With the arrangement 100 of the embodiment illustrated in Figure 1, a data collection tool 102 is separated from, and operates independently of, the basic system 101 as will be discussed in more detail below. The data collection tool 102 is a digital entity having computing and storage capacity and being configured to subjecting candidates to inquiries via an interface in order to collect candidate information on which an assessment subsequently can be made as to whether the candidate is a good fit for the advertised job, and thus replaces the traditional recruitment/screening tool.

Thus, each one of the basic system 101 and the data collection tool 102 - which typically are embodied in the form of independent software entities - executes on a separate processing resource in the form of e.g. microprocessors such as central processing units (CPUs), graphical processing units (GPUs) or digital signal processors (DSPs), or application specific integrated circuits (ASICs), field-programmable gate arrays (FPGAs), complex programmable logic devices (CPLDs), etc.

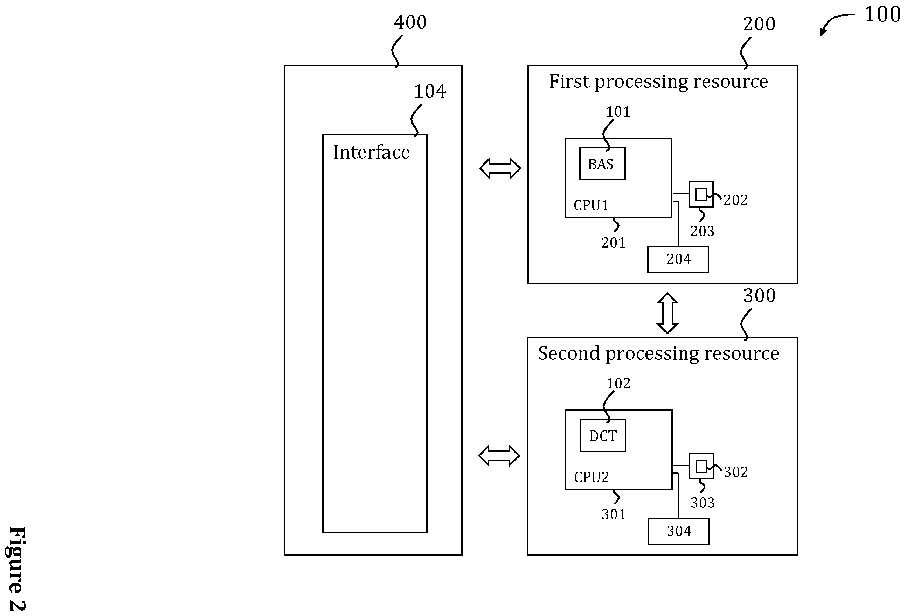

This is illustrated in Figure 2 showing the arrangement 100 of Figure 1 from a hardware perspective, where a first processing resource 200 is formed by a first processing unit 201 (referred to as CPU1) which executes software embodying the basic system 101 (referred to as BAS) while a second processing resource 300 is formed by a second processing unit 301 (referred to as CPU2) which executes software embodying the data collection tool 102 (referred to as DCT). Hence, the basic system 101 and the data collection tool 102 are separated also in terms of data management and data protection. A malicious party performing an attack on the arrangement 100 to obtain data from the basic system 101 and the data collection tool 102 would effectively have to perform separate attacks on the two processing resources 200, 300. Advantageously, with the arrangement 100 of the embodiment illustrated in Figure 1, the level of data protection is substantially raised.

The steps and actions undertaken by the basic system 101 and the data collection tool 102 according to embodiments disclosed herein are hence in practice performed by the first processing unit 201 and the second processing unit 301, respectively.

The first and second processing units 201, 301 of the first processing resources 200, 300 are arranged to execute a respective computer program 202, 302 for implementing the basic system 101 and the data collection tool 102 downloaded to a first and second storage medium 203, 303 associated with the first and second processing units 201, 301, such as a Random Access Memory (RAM), a Flash memory or a hard disk drive. The processing units 201, 301 are arranged to cause the arrangement 100 to carry out the method according to embodiments when the appropriate computer programs 202, 302 comprising computer-executable instructions are downloaded to the storage mediums 203, 303 and executed by the processing units 201, 301. The storage mediums 203, 303 may also be computer program products comprising the computer programs 202, 302. Alternatively, the computer programs 202, 302 may be transferred to the storage mediums 203, 303 by means of a suitable computer program product, such as a Digital Versatile Disc (DVD) or a memory stick. As a further alternative, the computer programs 202, 302 may be downloaded to the storage mediums 203, 303 over a network. Each processing unit 201, 301 is further arranged with an interface 204, 304 for communication of data with the other processing resource and with the interface 104 being accessible by the candidate 103 via e.g. a screen of a smart phone utilized for conducting the job application process. The interface 104 may be embodied in the form of a web page hosted on a web server 400.

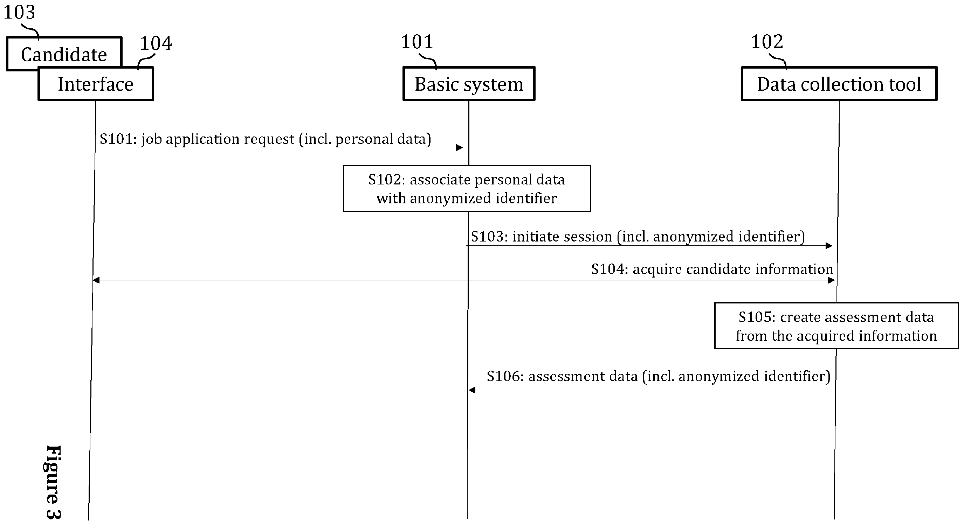

Reference will now be made to Figure 3 showing a signalling diagram illustrating a method of the system 100 of handling a job application according to an embodiment.

Thus, a candidate 103 desiring to apply for the advertised job will initially communicate via interface 104 (in this example thus being embodied by means of a web page) with the basic system 101, for instance via a web browser on a selected user device such as a smart phone, tablet, laptop, desktop computer, etc. The basic system 101 will thus in step S101 acquire, via the interface 104, the request of the candidate for the advertised job.

At this or an earlier stage, the candidate will typically also be requested to state appropriate personal data in the form of e.g. e-mail address, phone number or home address such that the employer (or an external recruiter commissioned by the employer for the purpose of handling the recruitment process) subsequently can contact the candidate.

The candidate 103 may upon accessing the web page where the advertised job is located press an "apply" icon for initiating the job application process.

In step S102, the personal data (denoted "NN" in Figure 1) of the candidate 103, for instance the candidate's e-mail address, is associated in the basic system 101 with an anonymous identifier for the particular job application process being initialized, in this example "001". The process of associating personal data with an anonymous identifier is known as pseudonymization. A database 108 in the basic system 101 may store the association between the personal data and the anonymous identifier.

The personal data may also be held e.g. in an ATS 109 of the basic system 101 and does not leave the basic system 101.

Upon having received the job application request in step S101 and associated the personal data "NN" of the candidate 103 with the anonymized candidate identifier "001" in step S102 in response thereto, the basic system 101 initiates a session with the data collection tool 102 and further provides the data collection tool 102 with the anonymized identifier ("001").

Advantageously, with the data collection tool 102 executing separately from the basic system 101, the personal data "NN" of the candidate 103 will not be entered into the data collection tool 102 but is maintained in the basic system 101 separately from the information to be entered into the data collection tool 102. Hence, the second processing resource 300 executing the appropriate software 302 for embodying the data collection tool 102 cannot associate information entered by the candidate 103 into the data collection tool 102 with the candidate's personal data "NN".

In other words, any information entered by the candidate 103 via the interface 104 into the data collection tool 102 is associated with the anonymized identifier "001" utilized for allowing the basic system 101 to subsequently associate any resulting assessment data being output from the data collection tool 102 and input into the basic system 101 with the correct candidate, but is separated from the personal data in the form of the candidate's e-mail address entered by the candidate 103 into of the basic system 101 operating independently from the data collection tool 102.

Upon the basic system 101 initiating the session with the data collection tool 102 in step S103, the separate data collection tool 102 will acquire information from the candidate 103 required to complete the job application process. In other words, the data collection tool 102 acquires the information from the candidate 103 required to complete the job application process after the basic system 101 has initiated the session with the data collection 102 in step S103.

As is understood, the interface 104 via which the candidate 103 communicates with the arrangement 100 is shared between the basic system 101 and the data collection tool 102, as indicated with references numerals 104a, 104b separated by a dotted line for illustrative purposes.

Each of the basic system 101 and the data collection tool 102 is thus authorized to display information (e.g. forms and questions) to the candidate 103 and the interface 104 can be configured to direct a corresponding input accordingly to the requesting basic system 101 and the data collection tool 102. The contribution from the basic system 101 and the data collection tool 102 can be visible in the same view of the interface 104.

Hence, upon the user initially submitting the job application request in step S101 along with the personal data, the basic system 101 manages the interface 104 for presenting selected graphical data 104a of the basic system 101 to the candidate 103.

Thereafter, in step S104, the data collection tool 102 manages the interface 104 for presenting selected graphical data 104a of the data collection tool 102 to the candidate 103 for the purpose of acquiring information from the candidate required to complete the job application.

For instance, the candidate 103 may be subjected to questions of a questionnaire 105 presented via the interface 104 regarding her general skills in relation to the job being advertised, such as whether or not the candidate e.g. has a driver's license, is certified in a specific profession, or is fluent in a preferred language, to which questionnaire 105 the candidate 103 provides appropriate response data. The data collection tool 102 may further subject the candidate to a more elaborate test where the candidate is required to answer questions being relevant for a candidate to the advertised job, such as answering psychometric questions for establishing a personality type. Advantageously, this provides far stronger candidate data for making a fair assessment as compared to a traditional recruiting process based on e.g. a personal letter and a curriculum vitae (CV) and/or being subjected to standard-type questions. Further, the risk of any bias towards the candidate is decreased.

Also, a video session may be established in order to add video content/data to the job application during which the data collection tool 102 utilizes a camera 106 of the user device (e.g. a smart phone) via which the current job application process is setup.

In step S105, the data collection102 creates job application assessment data by processing the acquired candidate information, which thus may comprise both response data in view of the presented questionnaire 105 and video data recorded by the camera 106. As is understood, this assessment data may have many different appearances, for instance constituting a summary of the collected skill data and test data along with the recorded video, and/or a more compacted appearance such as a score designed to support an HR professional's evaluation of how well the candidate 103 fits the advertised job. Advantageously, this further reduces the risk of the candidate being subjected to any bias.

In case a video session is established with the candidate 103 utilizing the camera 106, the data collection tool 102 may advantageously process the recorded video data in an appropriate manner when creating the job application assessment data. For instance, since video data processing typically is a burdensome process in terms of processing resources being consumed, the processing unit 301 of the second processing resource 300 on which the data collection tool 102 executes may compress the video data before the video data is supplied to the basic system 101.

Also, the data collection tool 102 may format or crop the video data such that the video data complies with a standardized format or a format preferred by the basic system 101. Further, the data collection tool 102 may discard video data passages without content or passages with too low image quality to be meaningfully viewed before transferring the video data to the basic system 101.

Advantageously, the compression and/or formatting of video data by the second processing resource 300 greatly relieves the first processing resource 200 on which the basic system 101 executes from performing processing-heavy video data operations.

Finally, in step S106, the created job application assessment data is supplied by the data collection tool 102 along with the anonymised identifier "001" to the basic system 101 in a preferred format such as e.g. Extensible Markup Language (XML) or JavaScript Object Notation (JSON)..

The basic system 101 concludes from the anonymised identifier "001", e.g. via matching unit 110 fetching the association between "NN" and "001" from the database 108, that the job application assessment data is to be associated with the personal data "NN" and stores the job application assessment data in the ATS 109. Based on this data, the employer may subsequently evaluate whether or not the candidate 103 is a good fit for the advertised job.

As is understood, a recruitment/screening tool will have to handle large amounts of candidate information being input to the recruitment/screening tool by each candidate (for a potentially great number of candidates), which is burdensome on systems where the recruitment/screening tool is integrated with a basic system (being e.g. an HR system).

However, with the arrangement 100 according to the embodiments illustrated in Figures 1-3, the processing of candidate information provided to the data collection tool 102 in step S104 for creation of assessment data in step S105 which is subsequently provided to the basic system 101 in step S106 is exclusively undertaken in the data collection tool 102 which is separated from, and operates independently of, the basic system 101.

This has the advantageous effect that although the data collection tool 102 indeed is required to handle and process the candidate information being input for creating the job application assessment data, the processing will not burden the separate and independently operating basic system 101.

With further reference to Figure 1, the arrangement 100 may provide the option to protect the created job application assessment data at the data collection tool 102, for instance using an encryption key or token 107 provided by the basic system 101. Advantageously, this raises the level of security in the arrangement 100, and is further likely to increase the acceptance of the candidate 103 to provide information to the arrangement 100.

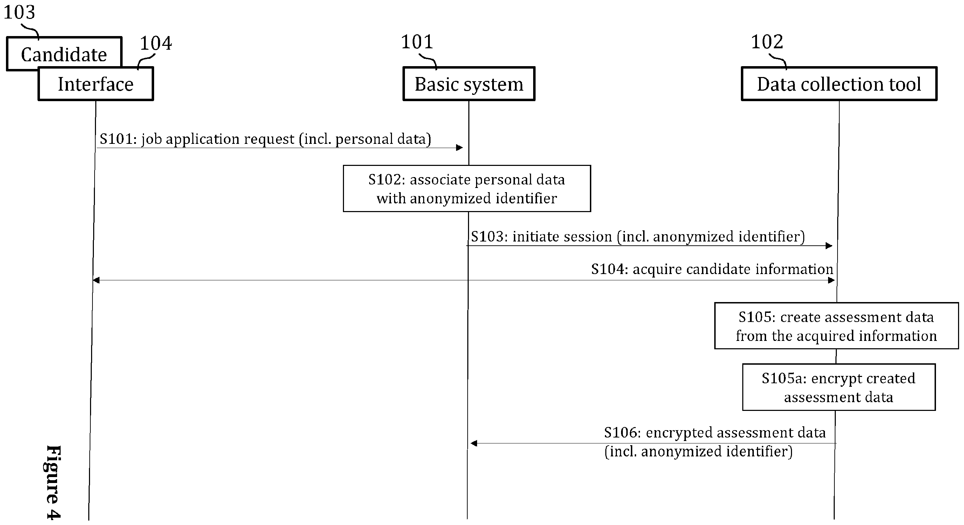

Figure 4 illustrates a further embodiment where the created job application assessment data is encrypted at the data collection tool 102 before being supplied to the basic system 101.

In an example, an asymmetric key encryption scheme is utilized to protect the created job application assessment data, where the created job application assessment data is encrypted in step S105a with an encryption key in the form of a public key 107 supplied by the basic system 101 to the data collection tool 102. The public key 107 is part of an asymmetric key pair where a corresponding private key is held by the basic system 101 for allowing the basic system 101 to decrypt the encrypted job application assessment data received in step S106 from the data collection tool 102. Commonly used asymmetric key encryption schemes include Rivest-Shamir-Adleman ("RSA") and Diffie-Hellman.

In another example, a symmetric key encryption scheme is utilized, where the data collection tool 102 and the basic system 101 holds the same symmetric key used for both encryption and decryption. In such a scenario, it may be that the data collection tool 102 stores a symmetric key which is supplied to the basic system 101 upon the data collection tool being implemented with the HR system 101 to form the system 100. Commonly used symmetric key encryption schemes include Advanced Encryption Standard (AES) and Data Encryption Standard (DES).

As is understood, all or parts of the job application assessment data may be encrypted by the data collection tool 102 in step S105a. For instance, it is more crucial for the candidate 103 that the video data collected by the camera 106 is encrypted since the candidate 103 indeed may be identified from the video data by a third party. By contrast answers provided in the questionnaire typically do not enable identification of the candidate 103 on their own. Advantageously, this strengthens candidate integrity and further reduces the risk of bias towards the candidate.

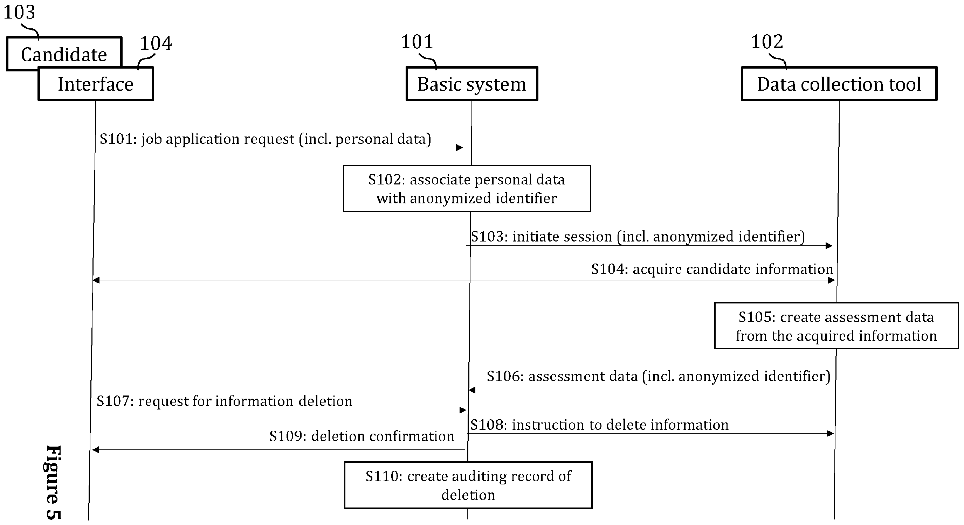

Figure 5 illustrates a further embodiment, where the candidate is given an opportunity to request (for instance in response to an enquiry of the basic system 101 via the interface 104) that any information provided by the candidate 103 and any resulting job application assessment data should be deleted at the data collection tool 102. Advantageously, this is likely to further increase the acceptance of the candidate 103 to provide information to the arrangement 100.

Thus, the basic system 101 receives in step S107 a request from the candidate 103 via the interface 104 that the information provided by the candidate 103 and the resulting job application assessment data is deleted at the data collection tool 102.

In response to the request, the basic system 101 instructs the data collection tool 102 in step S108 to delete the candidate information and the resulting job application assessment data held by the data collection tool 102.

This may be followed in step S109 by the basic system 101 providing a confirmation to the candidate 103 via the interface 104 that the candidate information and resulting job application assessment data held by the data collection tool 102 indeed has been deleted.

In practice, with reference again to Figure 2, upon the candidate 103 requesting via the interface 104 the basic system 101 of the deletion, the first processing resource 200 sends a request over its communication interface 204 to the communication interface 304 of the second processing resource 300 that the candidate information and job application assessment data held by the second processing resource 300 should be deleted, whereupon the information and data is deleted from the memory 303 of the second processing resource 300.

In an embodiment illustrated with step S110 of Figure 5, the basic system 101 creates an auditing record indicating an instant in time of receiving the deletion request of step S107 and an instant in time of performing the deletion of the candidate information and job application assessment data at the data collection tool 102.

Advantageously, this provides for traceability of the request received from the candidate 103 and the resulting deletion of information and data held by the data collection tool 102.

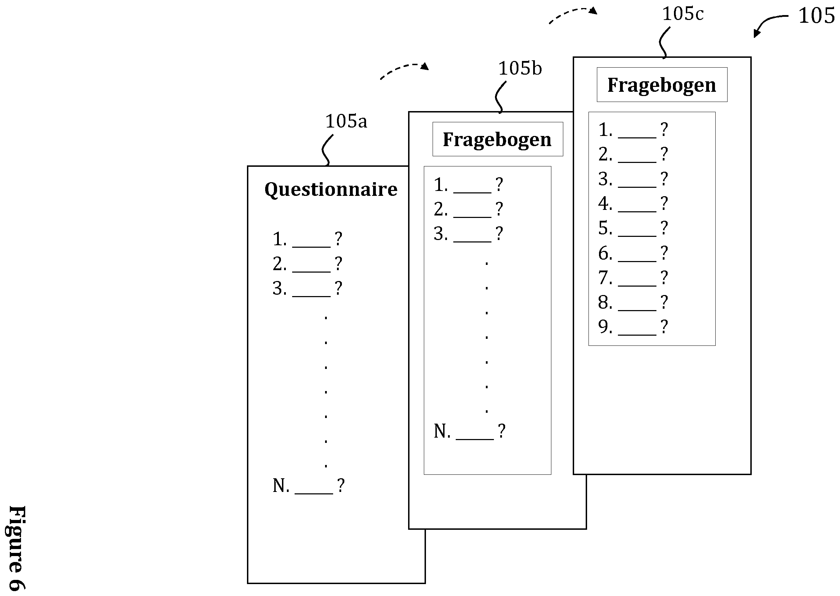

Figure 6 illustrates a further embodiment related to the questionnaire 105 that the candidate 103 is subjected to for providing information in step S104 based on which the job application assessment data is created in step S105.

Now, assuming that the data collection tool 102 stores a template 105a of the questionnaire 105 comprising N questions, for instance 30 questions. The template 105a of the questionnaire 105 with which the data collection tool 102 initially is configured may be identical (at least for a specific job category or role category) for all employers acquiring the data collection tool 102 from a provider (the provider of the basic system 101 is not necessarily the same as the provider of the data collection tool 102).

As further illustrated, it may be that the original template 105a for example is in English while the employer is applying for e.g. German-speaking candidates, in which case the template 105a preferably should be in German. This may be undertaken by the employer hosting the arrangement 100 using e.g. an automated translation tool or a professional translator translating the English template into German, resulting in a translated version 105b of the template 105a (in this example translating the English term "Questionnaire" into the corresponding German term "Fragebogen").

Also, it may well be that a particular employer does not wish to use all 30 questions comprised in the template 105a of the questionnaire but only, say, nine questions. In such a scenario, the employer hosting the basic system 101 is allowed to modify the template 105a - or in this example the translated version 105b - to provide a subset of the questions of the template 105a to form a version 105c comprising the nine questions of interest.

In another example, it may be that the employer wishes to add one or more questions to the template 105a (while possibly deleting or hiding others) or modify existing question(s) in the template 105a.

As is understood, while the template 105a of this example lists single questions, it may be that a main question, for instance question number 1, comprises a number of sub questions, for example depending on what the candidates' answer is to the main question. Again, the employer is allowed to delete or hide one or more selected sub questions if the employer does not want the candidate 103 to be exposed to those selected sub questions.

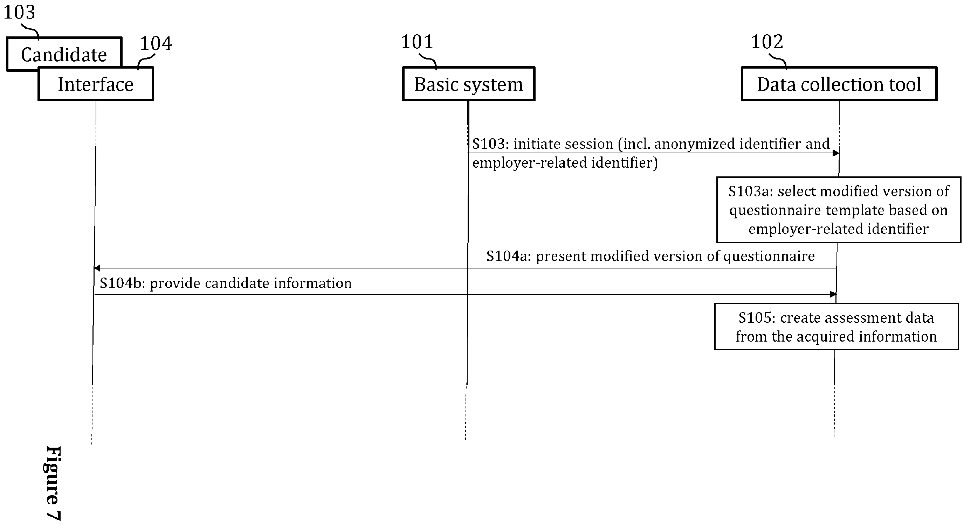

Reference is further made to the signalling diagram of Figure 7, where steps S101 and S102 has been omitted for brevity.

In this embodiment, upon the basic system 101 initiating a session with the data collection tool 102 in step S103, in addition to providing the anonymized candidate identifier as previously discussed, the basic system 101 further provides an employer-related identifier.

Based on the received employer-related identifier, the data collection tool 102 selects in step S103a a specific modified version of the questionnaire template 105a being associated at the data collection tool 102 with this particular employer-related identifier, for instance the version 105b translated into German and/or the version 105c of the questionnaire 105 having a reduced set of questions (being either deleted from or hidden in the template 105a). To this effect, the data collection tool 102 may utilize for example a locally stored look-up table to conclude which specific version of the questionnaire 105 to be used based on the provided employer-related identifier. Advantageously, this provides for customizing questionnaires based on needs of a specific employer - by editing a final questionnaire or by editing a questionnaire template to be used by that employer.

Thereafter, the candidate information is acquired by presenting to the candidate 103 via the interface 104 the selected modified version of the questionnaire 105 - such as the version 105c having a reduced number of questions and being translated into German - in step S104a.

The candidate responds to the questions posed in the presented modified version 105c of the questionnaire 105 and thus provides response data to the data collection tool 102 in step S104b. As is understood, this may also include providing video data as previously described.

Thereafter, the data collection tool 102 creates job application assessment in step S105 data based on the acquired candidate information, which may comprise both response data to the modified version 105c of the questionnaire and video data, before proceeding further as previously has been described.

Advantageously, by allowing an employer to store an individually designed version 105b, 105c of the template 105a of the questionnaire 105 being stored at the data collection tool 102, the job application process is adapted to the needs of the employer. Further, with the example above where an original set of 30 questions is reduced down to nine questions, the amount of data which ultimately will constitute the job application assessment data is reduced, thereby being less burdensome for the arrangement 100 to process and store.

As is understood, the employer may provide different employer-related identifiers to the data collection tool 102, where each identifier is associated with a specific version of the template, thereby allowing the employer to present different version of the template 105a to different candidates. For instance, a first employer-related identifier may designate a modified version of the questionnaire having a first number of questions while a second employer-related identifier may designate a modified version of the questionnaire having a second number of questions, and so on.

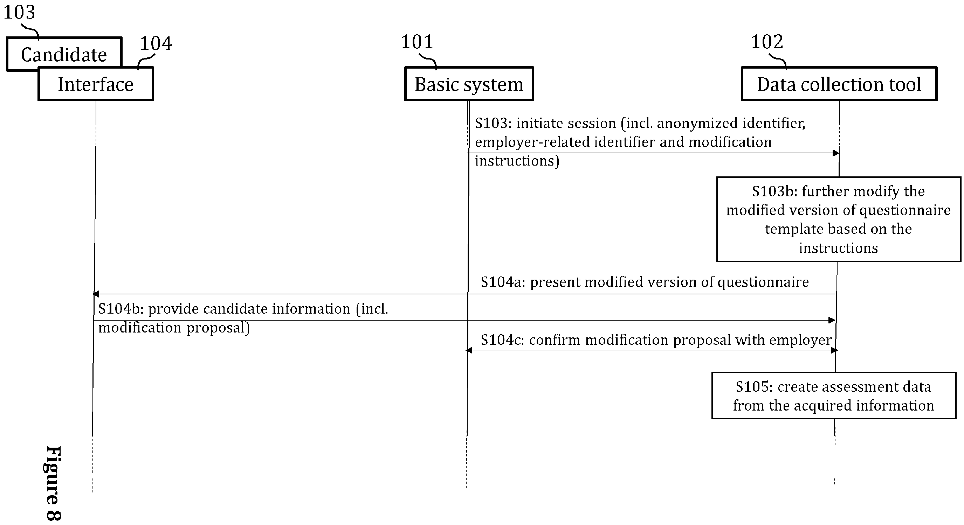

Figure 8 illustrates a further embodiment, where the employer is allowed to further modify the already modified version 105b, 105c of the template 105a of the questionnaire.

For instance, the employer may come to the conclusion that one or more questions should be added to or deleted from (or concealed in) the modified version 105, 105c presented to the candidate 103, that one or more questions should be amended, or that the translation is incorrect, etc.

Any such instructions of the employer may be sent from the basic system 101 to the data collection tool 102 with the initiation of the session in step S103.

The data collection tool 102 will thus in step S103b further modify the already modified version 105b, 105c of the template of the questionnaire 105 associated with the employer-related identifier based on the instructions received from the basic system 101. For instance, the data collection tool 102 may correct an incorrect translation of the modified version 105b, 105c, delete one question while slightly reformulating another, etc. The template is typically left unchanged even though modified version are created.

The further modified version of the template is thus presented to the candidate in step S104a and the response data of the candidate is received by the data collection tool 102 in step S104b.

In an embodiment, it is envisaged that the candidate 103 can, via the interface 104, provide modification proposals to the presented version of the questionnaire 105 to the data collection tool 102. For instance, the candidate 103 may have noted further incorrect translations of the version of the questionnaire 105 presented in step 104b and propose corrections. Typically, such modification proposal would have to be confirmed by the employer hosting the basic system 101 as illustrated with step S104c before actually being implemented by the data collection tool 102 in the just presented version of the questionnaire 105.

It should be noted that the candidate 103 may provide a modification proposal in step 104b even in a scenario where the basic system 101 does not instruct any further modification to be performed of the modified version 105b. 105c of the template 105a of the questionnaire addressed by means of the employer-related identifier sent in step 103. Again, any such modification proposal would typically have to be confirmed by the employer hosting the basic system 101.

As is understood, the basic system 101 may evaluate one or more modification proposals received from one or more candidates 104 to determine whether or not further modification is to be undertaken, even implicit modification proposals.

For instance, assuming that for some reason a plurality of candidates do not answer a certain question, or that their answers given to the question is not particularly useful upon evaluating the job application assessment data received by the basic system 101; if so, the employer may decide that the question should be deleted and will hence instruct the data collection tool 102 accordingly.

As can be concluded from the description of the various embodiments hereinabove, the proposed system 100 enables a substantial raise in the level of data protection, since the personal data of the candidate 101 does not leave the basic system 101 and is thus never handled by the separate data collection tool 102.

Further, by separating the data collection tool 102 from the basic system 101, any modification at the data collection tool 102, such as the modification of the questionnaire presented to the candidate 103 is far more straightforward as compared to a scenario where the data collection tool 102 is integrated with the basic system 101. Advantageously, this typically provides for a stronger set of candidate data being collected.

The separation of the data collection tool 102 and the basic system 101 further allows a user device, such as a smart phone or a tablet to interface with the data collection tool 102 separate from any interaction with the basic system 101.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method in an arrangement (100) comprising a basic system (101) executing on a first processing resource (200) and a data collection tool (102) executing on a separate second processing resource (300), the method comprising:
receiving (S101), by the basic system (101), a job application request of a candidate (103) via an interface (104) associated with the arrangement (100), wherein the request includes personal data of the candidate (103);
associating (S102), by the basic system (101), the personal data of the candidate (103) with an anonymized identifier;
initiating (S103), by the basic system (101), a session with the data collection tool (102) and providing the data collection tool (102) with the anonymized identifier;
acquiring (S104), by the data collection tool (102) via the interface (104), information from the candidate (103) required to complete the job application;
creating (S105), by the data collection tool (102), job application assessment data by processing the acquired candidate information; and
supplying (S106), by the data collection tool (102), the created job application assessment data to the basic system (101) along with the anonymized identifier, wherein the basic system (101) is enabled to associate the job application assessment data created by the data collection tool (102) with the personal data of the candidate (103).

2. The method of claim 1, further comprising:
encrypting (S105a), by the data collection tool (102), at least a subset of the created job application assessment data, and supplying (S106) the encrypted subset of the job application assessment data to the basic system (101).

3. The method of claim 2, wherein the encrypting (S105a) of the created job application assessment data is performed utilizing a public key supplied by the basic system (101) to the data collection tool (102).

4. The method of any one of the preceding claims, further comprising:
receiving (S107), by the basic system (101) via the interface (104), a request from the candidate (103) that the acquired candidate information and the created job application assessment data should be deleted; and
sending (S108), from the basic system (101) to the data collection tool (102), an instruction to delete said acquired candidate information and the created job application assessment data at the data collection tool (102).

5. The method of claim 4, further comprising:
providing (S109), by the basic system (101) via the interface (104), a confirmation to the candidate (103) that the acquired candidate information and the created job application assessment data has been deleted at the data collection tool (102).

6. The method of any one of claims 4 or 5, further comprising:
registering, by the basic system (101), a time of receiving the request for deletion of the acquired candidate information and the created job application assessment data from the candidate (102) and a time of performing the deletion of the acquired candidate information and the created job application assessment at the data collection tool (102).

7. The method of any one of the preceding claims, the acquired information from the candidate (103) required to complete the job application comprising one or more of candidate video data recorded by a camera (106) of the interface (104) and candidate response data to a questionnaire (105) presented to the candidate (103) by the data collection tool (102) via the interface (104).

8. The method of claim 7, the creating (S105), by the data collection tool (102), of job application assessment data comprising one or more of formatting, cropping and compressing the acquired candidate video data.

9. The method of any one of claims 7 or 8, wherein the data collection tool (102) is configured with a template (105a) of the questionnaire (105),
the initiating (S103), by the basic system (102), of a session with the data collection tool (102) further comprises providing the data collection tool (102) with at least one identifier of the employer hosting the basic system (101); and
the acquiring (S104), by the data collection tool (102) via the interface (104), of information from the candidate (103) required to complete the job application comprises presenting (104a), by the data collection tool (102) via the interface (104), a modified version (105b, 105c) of the template (105a) of the questionnaire (105) being associated with the at least one identifier of the employer; and the method further comprises:
receiving (104b), by the data collection tool (102) via the interface (104), response data of the candidate (103) to said presented modified version (105, 105c) of the template (105a) of the questionnaire (105).

10. The method of claim 9, wherein the modification of the template (105a) of the questionnaire (105) comprises one or more of: translating a language of the template (105a) to a different language, adding questions to the template (105a), deleting questions from the template (105a) and modifying questions of the template (105a) to create the modified version of the template.

11. The method of claim 9 or 10, wherein the initiating (S103), by the basic system (102), of a session with the data collection tool (102) further comprises:
instructing the data collection tool (102) to further modify the modified version (105b, 105c) of the template (105a) of the questionnaire (105) associated with the at least one identifier of the employer for presentation to the candidate (103).

12. The method of any one of claims 9-11, the receiving (104b), by the data collection tool (102) via the interface (104), of response data of the candidate (103) to said presented modified version of the template (105a) of the questionnaire (105) further comprising:
receiving a modification proposal of the candidate (103) to further modify the presented version of the template (105a) of the questionnaire (105); and
confirming (S104c), by the data collection tool (102), with the basic system (101) that the modification proposal of the candidate (103) is to be implemented in the presented version of the template (105a) of the questionnaire (105).

13. Computer programs (202, 302) comprising computer-executable instructions for causing the arrangement (100) to perform steps recited in any one of claims 1-12 when the computer-executable instructions are executed on first and second processing units (201, 301) included in the arrangement (100).

14. A computer program product comprising computer readable mediums (203, 303), the computer readable mediums having the computer programs (202, 302) according to claim 13 embodied thereon.

15. An arrangement (100) comprising a basic system (101) executing on a first processing resource (200) and a data collection tool (102) executing on a separate second processing resource (300), the arrangement (100) being operative to:
receiving (S101), by the basic system (101), a job application request of a candidate (103) via an interface (104) associated with the arrangement (100), wherein the request includes personal data of the candidate (103);
associating (S102), by the basic system (101), the personal data of the candidate (103) with an anonymized identifier;
initiating (S103), by the basic system (101), a session with the data collection tool (102) and providing the data collection tool (102) with the anonymized identifier;
acquiring (S104), by the data collection tool (102) via the interface (104), information from the candidate (103) required to complete the job application;
creating (S105), by the data collection (102), job application assessment data by processing the acquired candidate information; and
supplying (S106), by the data collection tool (102), the created job application assessment data to the basic system (101) along with the anonymized identifier, wherein the basic system (101) is enabled to associate the job application assessment data created by the data collection tool (102) with the personal data of the candidate (103).
